# EUROPEAN PATENT APPLICATION

(11) **EP 4 615 077 A1**
(43) Date of publication of application: **10.09.2025**
(21) Application number: 22963888.7
(22) Date of filing: 02.11.2022
(51) Int. Cl.: H04W 64/00

(54) **INFORMATION PROCESSING METHOD AND APPARATUS, COMMUNICATION DEVICE AND STORAGE MEDIUM**

(71) Applicant: Beijing Xiaomi Mobile Software Co., Ltd., Beijing 100085 (CN)
(72) Inventor: LU, Wei, Beijing 100085 (CN)
(74) Representative: Dehns Germany Partnerschaft mbB
(86) International application number: PCT/CN2022/129344
(87) International publication number: WO 2024/092573

(57) **Abstract**

Embodiments of the present disclosure provide an information processing method and apparatus, a communication device and a storage medium. The method is executed by a first user equipment (UE). The method comprises: sending a first request message to a network device, wherein the first request message comprises first role information, the first role information is used for indicating a first role played by the first UE in a predetermined service, and the first role information is used for the network device to verify whether the first UE can play the first role in the predetermined service; and receiving a first response message returned by the network device on the basis of the first request message, wherein the first response message is at least used for indicating whether the first UE is authorized to play the first role, the first response message is an acceptance message when the first UE is authorized to play the first role, and the acceptance message comprises a first key corresponding to the first role, wherein the first key is used for mutual discovery between the first UE and other UEs.

## Description

### FIELD

The present disclosure relates to the field of wireless communication technologies but is not limited to the field of wireless communication technologies, and particularly relates to an information processing method and apparatus, a communication device and a storage medium.

### BACKGROUND

Ranging/sidelink (SL) positioning services may involve different types of user equipment (UE). These types of UE may include an SL reference UE, a target UE, an auxiliary UE, a positioning UE, an SL positioning server UE, and an SL positioning client UE.

However, in related art, security issues exist in ranging/SL positioning services. That is, the security issues of ranging/SL positioning services need to be further addressed.

### SUMMARY

Embodiments of the present disclosure provide an information processing method and apparatus, a communication device and a storage medium.

A first aspect of the embodiments of the present disclosure provides an information processing method, performed by a first user equipment (UE), and the method includes:
sending a first request message to a network device, where the first request message includes first role information, the first role information is used to indicate a first role that the first UE serves as in a predetermined service, and the first role information is used by the network device to verify whether the first UE is able to serve as the first role in the predetermined service;
receiving a first response message returned by the network device based on the first request message, where the first response message is at least used to indicate whether the first UE is authorized to serve as the first role,
where in response to the first UE being authorized to serve as the first role, the first response message is determined to be an acceptance message including a first key corresponding to the first role, where the first key is used for a mutual discovery between the first UE and other UEs.

A second aspect of the embodiments of the present disclosure provides an information processing method, performed by a network device, the method includes:
receiving a first request message from a first UE, where the first request message includes first role information, and the first role information is used to indicate a first role that the first UE serves as in a predetermined service,
verifying, based on the first role information, whether the first UE is able to serve as the first role in the predetermined service, to obtain a first verification result;
in response to the first verification result indicating that the first UE is authorized to serve as the first role, returning an acceptance message to the first UE, where the acceptance message includes a first key generated based on the first role information, and the first key is used for a mutual discovery between the first UE and other UEs.

A third aspect of the embodiments of the present disclosure provides an information processing method, performed by a second UE, where the method includes:
broadcasting an announcement message, where the announcement message includes second role information, the second role information indicates a second role that the second UE is able to serve as in a predetermined service, the announcement message is protected for security using a second key corresponding to the second role, and the second key is sent by the network device in a case that the network device verifies that the second UE is authorized to serve as the second role in the predetermined service.

A fourth aspect of the embodiments of the present disclosure provides an information processing method, performed by a third UE, where the method includes:
receiving an announcement message broadcasted by a second UE, the announcement message including second role information, where the second role information indicates a second role that the second UE is able to serve as in a predetermined service;
verifying a security of the announcement message using a second key corresponding to the second role; and
determining, based on a second verification result of the announcement message, whether the second UE is able to serve as the second role in the predetermined service.

A fourth aspect of the embodiments of the present disclosure provides an information processing method, performed by a third UE, where the method includes:
receiving an announce message broadcasted by a second UE, the announce message including second role information, where the second role information indicates a second role that the second UE is able to serve as in a predetermined service;
verifying a security of the announce message using a second key corresponding to the second role; and
determining, based on a second verification result of the announce message, whether the second UE is able to serve as the second role in the predetermined service.

A fifth aspect of the embodiments of the present disclosure provides an information processing method, performed by a fourth user equipment (UE), where the method includes:
sending a third request message, where the third request message includes third role information, where the third role information is used to indicate a third role that a fifth UE serves as in a predetermined service; and
receiving a third response message for the third request message, where the third request message is returned by the fifth UE based on a verification result of the third request message based on a third key corresponding to the third role.

A sixth aspect of the embodiments of the present disclosure provides an information processing method, performed by a fifth user equipment (UE), where the method includes:
receiving a third request message from a fourth UE, where the third request message includes third role information, where the third role information is used to indicate a third role that the fifth UE serves as in a predetermined service;
verifying the third request message using a third key corresponding to the third role; and
sending a third response message to the fourth UE based on a verification result of the third request message.

A seventh aspect of the embodiments of the present disclosure provides an information processing apparatus, where the apparatus includes:
a first sending module configured to send a first request message to a network device, where the first request message includes first role information, where the first role information is used to indicate a first role that the first UE serves as in a predetermined service, and the first role information is used by the network device to verify whether the first UE is able to serve as the first role in the predetermined service;
a first receiving module configured to receive a first response message returned by the network device based on the first request message, where the first response message is at least used to indicate whether the first UE is authorized to serve as the first role,
where in response to the first UE being authorized to serve as the first role, the first response message is determined to be an acceptance message including a first key corresponding to the first role, where the first key is used for a mutual discovery between the first UE and other UEs.

An eighth aspect of the embodiments of the present disclosure provides an apparatus, where the apparatus includes:
a second receiving module configured to receive a first request message from a first UE, where the first request message includes first role information, where the first role information is used to indicate a first role that the first UE serves as in a predetermined service;
a first verification module configured to verify, based on the first role information, whether the first UE is able to serve as the first role in the predetermined service, to obtain a first verification result; and
a second sending module configured to, in response to the first verification result indicating that the first UE is authorized to serve as the first role, return an acceptance message to the first UE, where the acceptance message includes a first key generated based on the first role information, where the first key is used for a mutual discovery between the first UE and other UEs.

A ninth aspect of the embodiments of the present disclosure provides an information processing apparatus, where the apparatus includes:
a broadcasting module configured to broadcast an announcement message, where the announcement message includes second role information, the second role information indicates a second role that the second UE is able to serve as in a predetermined service, the announcement message is protected for security using a second key corresponding to the second role, and the second key is sent by the network device in a case that the network device verifies that the second UE is authorized to serve as the second role in the predetermined service.

A tenth aspect of the embodiments of the present disclosure provides an information processing apparatus, where the apparatus includes:
a third receiving module configured to receive an announcement message broadcasted by a second UE, the announcement message including second role information, where the second role information indicates a second role that the second UE is able to serve as in a predetermined service;
a second verification module configured to use a second key corresponding to the second role to verify the security of the announcement message; and
a determination module configured to determine, based on a second verification result of the announcement message, whether the second UE is able to serve as the second role in the predetermined service.

An eleventh aspect of the embodiments of the present disclosure provides an information processing apparatus, where the apparatus includes:
a fourth sending module configured to send a third request message, where the third request message includes third role information, and the third role information is used to indicate a third role that a fifth UE serves as in a predetermined service;
a fourth receiving module configured to receive a third response message for the third request message, where the third request message is returned by the fifth UE based on a verification result of the third request message using a third key corresponding to the third role.

A twelfth aspect of the embodiments of the present disclosure provides an information processing apparatus, where the apparatus includes:
a fifth receiving module configured to receive a third request message from a fourth UE, where the third request message includes third role information, and the third role information is used to indicate a third role that the fifth UE serves as in a predetermined service;
a third verification module configured to verify the third request message using a third key corresponding to the third role; and
a fifth sending module configured to send a third response message to the fourth UE based on a verification result of the third request message.

A thirteenth aspect of the embodiments of the present disclosure provides a communication device, including a processor, a transceiver, a memory, and an executable program stored in the memory and executable by the processor, where the processor executes the executable program to perform the method according to any one of the first to sixth aspects.

A fourteenth aspect of the embodiments of the present disclosure provides a computer-readable storage medium having stored therein an executable program that, when executed by a processor, causes the method according to any one of the first to sixth aspects.

According to the embodiments of the present disclosure, the UE provides first role information to a network device, where the first role information indicates a first role that the UE is able to serve as in a predetermined service. If the UE is authorized to serve as the first role in the predetermined service, the UE receives a first key generated by the network device based on the first role information. The first UE uses the first key for a mutual discovery with other UEs, which not only enables a mutual discovery but also ensures that the discovered UE is authorized by the network device to serve as the corresponding role, thereby avoiding security issues caused by illegal UEs falsely serving as roles that they are not authorized to serve, and improving the security of the UE in the predetermined service.

It should be understood that the above general description and the following detailed description are exemplary and explanatory only and do not limit the embodiments of the present disclosure.

### BRIEF DESCRIPTION OF THE DRAWINGS

The drawings, which are incorporated in and constitute a part of this specification, illustrate embodiments consistent with the embodiment of the present disclosure and, together with the description, serve to explain the principles of the embodiments of the present disclosure.

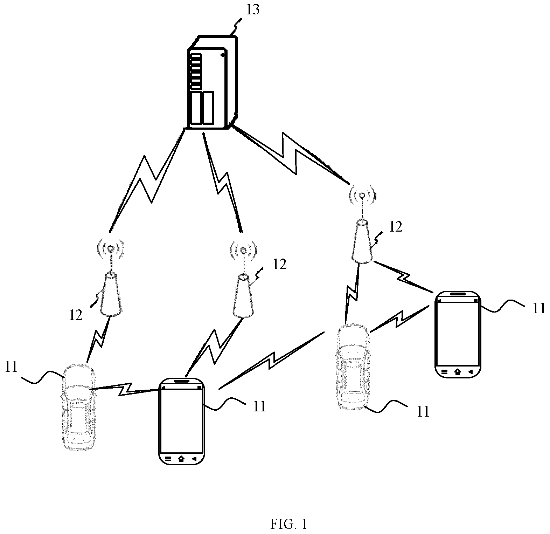

FIG. 1 is a structural schematic diagram of a wireless communication system according to an exemplary embodiment;
FIG. 2A is a flowchart of an information processing method according to an exemplary embodiment;
FIG. 2B is a flowchart of an information processing method according to an exemplary embodiment;
FIG. 3A is a flowchart of an information processing method according to an exemplary embodiment;
FIG. 3B is a flowchart of an information processing method according to an exemplary embodiment;
FIG. 4 is a flowchart of an information processing method according to an exemplary embodiment;
FIG. 5 is a flowchart of an information processing method according to an exemplary embodiment;
FIG. 6A is a flowchart of an information processing method according to an exemplary embodiment;
FIG. 6B is a flowchart of an information processing method according to an exemplary embodiment;
FIG. 7 is a flowchart of an information processing method according to an exemplary embodiment;
FIG. 8A is a flowchart of an information processing method according to an exemplary embodiment;
FIG. 8B is a flowchart of an information processing method according to an exemplary embodiment;
FIG. 9 is a structural schematic diagram of an information processing apparatus according to an exemplary embodiment;
FIG. 10 is a structural schematic diagram of an information processing apparatus according to an exemplary embodiment;
FIG. 11 is a structural schematic diagram of an information processing apparatus according to an exemplary embodiment;
FIG. 12 is a structural schematic diagram of an information processing apparatus according to an exemplary embodiment;
FIG. 13 is a structural schematic diagram of an information processing apparatus according to an exemplary embodiment;
FIG. 14 is a structural schematic diagram of an information processing apparatus according to an exemplary embodiment;
FIG. 15 is a structural schematic diagram of a UE according to an exemplary embodiment; and
FIG. 16 is a structural schematic diagram of a communication device according to an exemplary embodiment.

### DETAILED DESCRIPTION

Hereinafter, exemplary embodiments will be described in detail, with examples thereof shown in the drawings. When the following description refers to the drawings, unless otherwise indicated, the same numbers in different drawings represent the same or similar elements. The implementations described in the following exemplary embodiments do not represent all implementations consistent with the embodiments of the present disclosure. Instead, they are merely examples of apparatuses and methods consistent with some aspects of the embodiments of the present disclosure.

The terms used in the embodiments of the present disclosure are for the purpose of describing specific embodiments only and are not intended to limit the embodiments of the present disclosure. The singular forms "a," "an," and "the" used in the present disclosure and the appended claims are also intended to include plural forms, unless the context clearly indicates otherwise. It should also be understood that the term "and/or" as used herein refers to and includes any or all possible combinations of one or more of the associated listed items.

It should be understood that although the terms "first," "second," "third," etc. may be used in the embodiments of the present disclosure to describe various information, these terms should not be limited to these terms. These terms are to distinguish the same type of information from each other. For example, without departing from the scope of the embodiments of the present disclosure, first information may also be referred to as second information, and similarly, second information may also be referred to as first information. Depending on the context, the word "if" as used herein may be interpreted as "when," "upon," or "in response to determining."

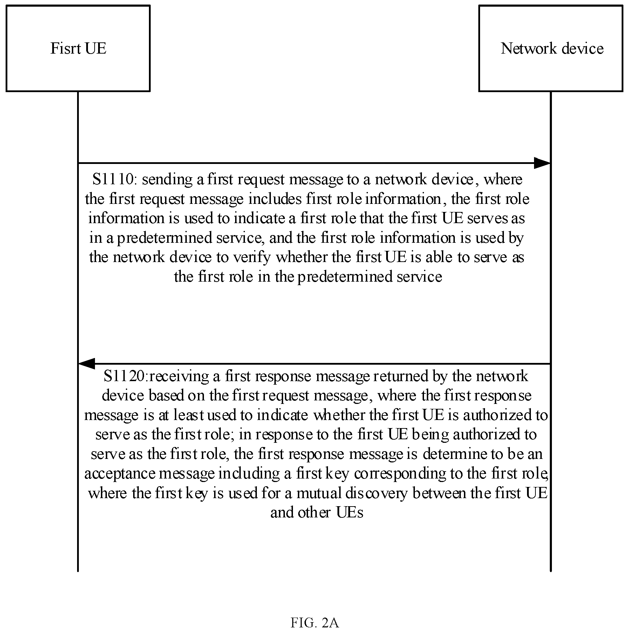

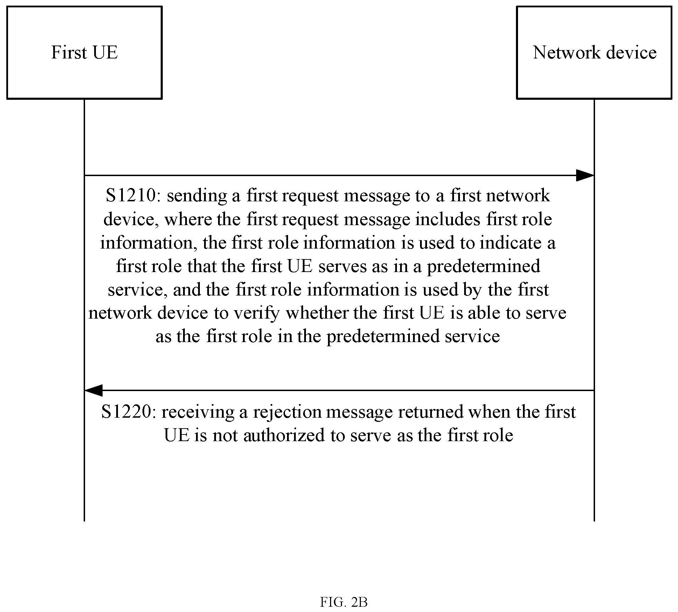

Please refer to FIG. 2, which shows a structural schematic diagram of a wireless communication system provided by an embodiment of the present disclosure. As shown in the figure, the wireless communication system is a communication system based on cellular mobile communication technology, and the wireless communication system may include: a plurality of UEs 11 and a plurality of access devices 12.

The UE 11 may refer to a device that provides voice and/or data connectivity to a user. The UE 11 may communicate with one or more core networks via a radio access network (RAN). The UE 11 may be an Internet of Things (IoT) UE, such as a sensor device, a mobile phone (or cellular phone), or a computer with an IoT UE, for example, a fixed, portable, pocket-sized, handheld, computer-built-in, or vehicle-mounted device. For example, the UE 11 may be a station (STA), a subscriber unit, a subscriber station, a mobile station, a mobile, a remote station, an access point, a remote terminal, an access terminal, a user terminal, a user agent, a user device, or user equipment (UE). Alternatively, the UE 11 may also be a device of an unmanned aerial vehicle. Alternatively, the UE 11 may also be a vehicle-mounted device, such as a driving computer with wireless communication functions or a wireless communication device externally connected to a driving computer. Alternatively, the UE 11 may also be a roadside device, such as a street lamp, a traffic light, or other roadside devices with wireless communication functions.

The access device 12 may be a network-side device in the wireless communication system. The wireless communication system may be a fourth-generation mobile communication technology (4G) system, also known as a Long-Term Evolution (LTE) system; or the wireless communication system may also be a fifth-generation (5G) system, also known as a new radio (NR) system or a 5G NR system. Alternatively, the wireless communication system may also be a next-generation system of the 5G system. The access network in the 5G system may be referred to as a New Generation-Radio Access Network (NG-RAN). Alternatively, the wireless communication system may also be a machine-type communication (MTC) system.

The access device 12 may be an evolved NodeB (eNB) used in the 4G system. Alternatively, the access device 12 may also be a next-generation NodeB (gNB) using a centralized distributed architecture in the 5G system. When the access device 12 adopts a centralized distributed architecture, it usually includes a central unit (CU) and at least two distributed units (DUs). A packet data convergence protocol (PDCP) layer, a radio link control (RLC) layer, and a media access control (MAC) layer protocol stack are set in the central unit; a physical (PHY) layer protocol stack is set in the distributed unit. The specific implementation of the access device 12 is not limited in the embodiments of the present disclosure.

A wireless connection may be established between the access device 12 and the UE 11 via a wireless radio interface. In different implementations, the wireless radio interface is a wireless radio interface based on the fourth-generation mobile communication network technology (4G) standard, or the wireless radio interface is a wireless radio interface based on the fifth-generation mobile communication network technology (5G) standard, such as the new radio (NR) air or the wireless radio interface may also be a wireless radio interface based on the next-generation mobile communication network technology standard after 5G.

Each UE with ranging functionality has specific capabilities and can serve specific roles based on its capabilities, playing different roles from other UEs in ranging/SL positioning services. If unauthorized UEs serves as specific roles during the discovery process, mutual deception between UEs may occur, leading to service violations.

For example, when a UE that is not allowed to serve as an auxiliary UE participates in a ranging/SL positioning service, the UE may provide incorrect positioning information to the reference UE and/or the target UE.

When a UE that is not allowed to serve as a server is discovered, if the UE participates in the ranging/SL positioning service, the UE may obtain location information of other UEs that it is not allowed to access or may provide incorrect calculation results to the reference UE and/or the target UE.

When a UE that is not allowed to serve as a client role requests ranging or other services from the ranging server or other UEs, it may obtain location information of other UEs that it is not allowed to access.

If a UE not allowed to serve as a specific role serves as the specific role, security issues may arise, such as obtaining location information of other UEs that it is not authorized to access, providing incorrect measurement results, and/or providing incorrect calculation results, ultimately leading to abnormal ranging results. Moreover, during message transmission, the transmission of illegal information such as viruses may also involve other information security and usage security risks for the UE.

As shown in FIG. 2A, an embodiment of the present disclosure provides an information processing method performed by a first UE, where the method includes the following steps.

S1110: sending a first request message to a network device, where the first request message includes first role information, the first role information is used to indicate a first role that the first UE serves as in a predetermined service, and the first role information is used by the network device to verify whether the first UE is able to serve as the first role in the predetermined service.

S1120: receiving a first response message returned by the network device based on the first request message, where the first response message is at least used to indicate whether the first UE is authorized to serve as the first role, where in response to the first UE being authorized to serve as the first role, the first response message is determined to be an acceptance message including a first key corresponding to the first role, where the first key is used for a mutual discovery between the first UE and other UEs.

The first UE may be a terminal of any form. For example, the first UE may be a mobile phone, a tablet computer, a wearable device, a vehicle-mounted device, a smart home device, a smart office device, and/or any UE with wireless communication functions.

In the embodiments of the present disclosure, the first UE may be any UE participating in the predetermined service. The predetermined service may be a ranging/SL positioning service.

In the embodiments of the present disclosure, the network device may be a core network device, including but not limited to: a proximity key management function entity (PKMF) and/or a direct discovery name management function (DDNMF).

The first role information may indicate the role that the UE can serve in the predetermined service. A UE may serve one or more roles in the predetermined service.

For example, the roles involved in the predetermined service may include but are not limited to at least one of the following:
a reference UE, used to provide a position reference for the object being measured;
a target UE, which is the object being measured;
an auxiliary UE, used to assist in position measurement between the reference UE and the target UE;
a positioning UE, used to determine the absolute position of the target UE based on its own absolute position, where the absolute position includes but is not limited to latitude and longitude;
a positioning server UE, used to calculate ranging or positioning results; or
a positioning client, used to request ranging or positioning results.

In specific implementations, a UE may serve one or more of these roles.

The first request message carries the first role information, so that after receiving the first role information, the network device may verify whether the first UE can serve as the first role in the predetermined service.

For example, the first role information may include a role code or string indicating the first role.

For example, if the network device stores information about the roles that the first UE can serve as, the network device can locally verify the first role that the first UE serves as locally.

As another example, the network device may determine whether the first UE is authorized to serve as the first role based on subscription data of the first UE.

The subscription data may be stored in a user data management (UDM) or a ranging application server or other network devices. The network device may request the subscription data from the UDM or the ranging application server or other second network devices.

The first request message may be any message sent by the first UE to the network device. For example, the first request message includes but is not limited to a discovery request message (Discovery Request message).

The first request message may also include identification information of the first UE. The identification information of the first UE may include but is not limited to a user information identifier (User Info Identifier). The user information identifier may uniquely identify the first UE.

In some embodiments, the first request message may also include a service code of the predetermined service.

In summary, the first request message may include the information required by the network device to verify whether the first UE can serve as the first role in the predetermined service.

After sending the first request message, the first UE continues to receive a response message (i.e., the first response message) for the first request message.

For example, if the network device is authorized to serve as the first role in the predetermined service, the network device may generate a first key corresponding to the first role.

In some embodiments, the first key is generated based on the first role. For example, the first key is generated using the first role information as an input parameter. In some embodiments, the first key may be generated based on the first role information and the service code of the predetermined service.

In another embodiment, different roles use different key generation algorithms, so even if the same service code of the predetermined service is used as the input parameter, different first keys will be generated.

The first response message may include an acceptance message, which indicates that the network device authorizes the first UE to serve as the first role. On the other hand, the acceptance message includes the first key, which can be used for security mechanisms in the mutual discovery between the first UE and other UEs (e.g., a second UE).

The first key may include but is not limited to a discovery key. Since the first key in the present disclosure corresponds to the first role, if there are N roles in the predetermined service, N sets of discovery keys will be generated. The discovery key may be at least used for integrity protection during a mutual discovery between the first UE and the second UE. Since the first key corresponds to the first role, during the mutual discovery process between UEs, the security of the discovery process can be ensured through the first key. In addition, once the security verification passes, the verification that the first UE can serve as the first role is also achieved, thereby avoiding the participation of illegal UEs in the predetermined service by claiming roles they are not authorized to serve, and thus reducing security issues caused by illegal UEs participating in the predetermined service.

In one embodiment, if the first response message includes at least one set of first keys, the first response message may be an acceptance message.

If a UE can serve as multiple first roles in the predetermined service, one implementation is that the first request message carries only the first role information of one role, so if the first UE is authorized to serve as that first role, the acceptance message will carry one first key.

If a UE can serve as multiple first roles in the predetermined service, another implementation is that the first request message carries the first role information of multiple first roles, so the first response message may carry multiple sets of first keys.

In one embodiment, if the first UE is not authorized to serve as the first role, the network device may not return a response message to the first UE, so the first UE will not receive the first key and thus cannot participate in a mutual discovery with the second UE.

As shown in FIG. 2B, an embodiment of the present disclosure provides an information processing method performed by a first UE, where the method includes the following steps.

S1210: sending a first request message to a network device, where the first request message includes first role information, the first role information is used to indicate a first role that the first UE serves as in a predetermined service, and the first role information is used by the network device to verify whether the first UE is able to serve as the first role in the predetermined service.

S1220: receiving a rejection message returned when the first UE is not authorized to serve as the first role.

If the network device determines that the first UE is not authorized to serve as the first role, the network device may also return a rejection message to the first UE. After receiving the rejection message, the first UE knows that it cannot participate in the predetermined service as the first role.

In one embodiment, the rejection message may include a rejection reason. The rejection reason informs the first UE of the reason for the rejection of authorization and issuance of the first key.

If one first request message can carry the first role information of multiple UEs that the first UE expects to serve as, in one embodiment, if one first role is not authorized, the first UE will receive a rejection message, or receive a response message that includes one or more first keys of the authorized first role and rejection reasons why the first roles is not authorized to serve as.

Of course, the above is only an example, and the specific implementation is not limited to the above examples.

In some embodiments, the predetermined service includes a ranging/sidelink (SL) positioning service, the first request message further includes a ranging/SL positioning service code (RSC).

In one embodiment, the predetermined service is not limited to the ranging/SL positioning service. For example, the predetermined service may also include other proximity services (ProSe).

This is only an example of the predetermined service, and the specific implementation is not limited to the above examples.

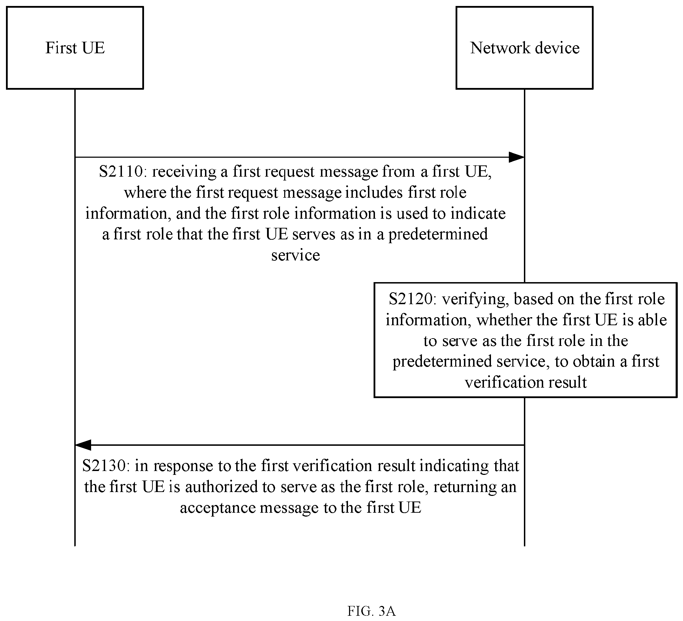

As shown in FIG. 3A, an embodiment of the present disclosure provides an information processing method performed by a network device, where the method includes the following steps.

S2110: receiving a first request message from a first UE, where the first request message includes first role information, and the first role information is used to indicate a first role that the first UE serves as in a predetermined service.

S2120: verifying, based on the first role information, whether the first UE is able to serve as the first role in the predetermined service, to obtain a first verification result.

S2130: in response to the first verification result indicating that the first UE is authorized to serve as the first role, returning an acceptance message to the first UE, where the acceptance message includes a first key generated based on the information, and the first key is used for a mutual discovery between the first UE and other UEs.

The network device may be a core network device, including but not limited to a DDNMF, PKMF, or policy control function (PCF).

The first request message may be forwarded or transparently transmitted by an access network device such as a base station.

In this embodiment, the first request message includes identification information of the first UE, which enables the network device to perform authorization verification for the first UE. At the same time, the first request message includes information about the role that the first UE requests or expects to serve as (first role information), thereby allowing verification of whether the first UE can be authorized to serve as the first role.

In this embodiment, the first key may be pre-generated based on role information for role included in the predetermined service, or it may be generated after receiving the first request message.

In summary, in this embodiment, if there are multiple roles in the predetermined service, the network device can generate the first key for each role. The first key may be a discovery key.

If the verification indicates that the first UE is authorized to serve as the first role which the first UE requesting or expecting to serve as (e.g., acting), the network device sends an acceptance message to the first UE, which includes the first key generated based on the first role information.

This first key is used for security assurance during a mutual discovery between the first UE and the second UE, and it can also be used by the second UE to verify whether the first UE is authorized to serve as the claimed role in the predetermined service.

In some embodiments, returning the first response message to the first UE based on the first verification result includes:
in response to the first verification result indicating that the first UE is not authorized to serve as the first role, returning a rejection message to the first UE.

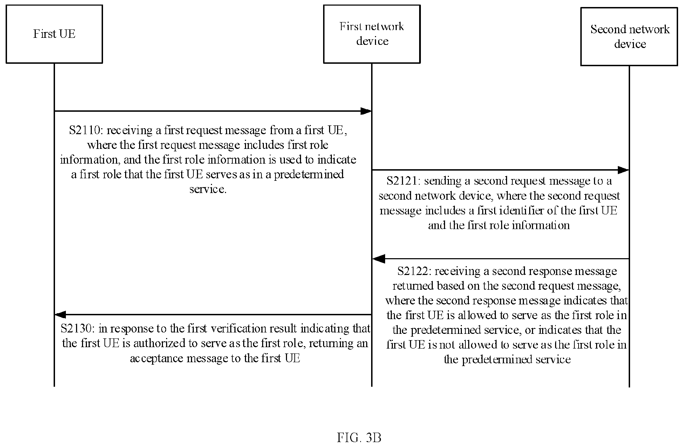

For example, as shown in FIG. 3B, verifying whether the first UE can serve as the first role in the predetermined service based on the first role information to obtain the first verification result includes the following steps.

S2121: sending a second request message to a second network device, where the second request message includes a first identifier of the first UE and the first role information.

S2122: receiving a second response message returned based on the second request message, where the second response message indicates that the first UE is allowed to serve as the first role in the predetermined service, or indicates that the first UE is not allowed to serve as the first role in the predetermined service.

The second network device may be a UDM or a server for the predetermined service.

In another example, if the network device locally stores subscription data of the first UE, the network device can locally verify whether the first UE is authorized to serve as the first role.

In one embodiment, the method further includes:
periodically or non-periodically updating the first keys corresponding to respective roles in the predetermined service based on freshness values or algorithm-updated parameters, thereby reducing security risks caused by repeated or prolonged use of the first key generated based on the same role information.

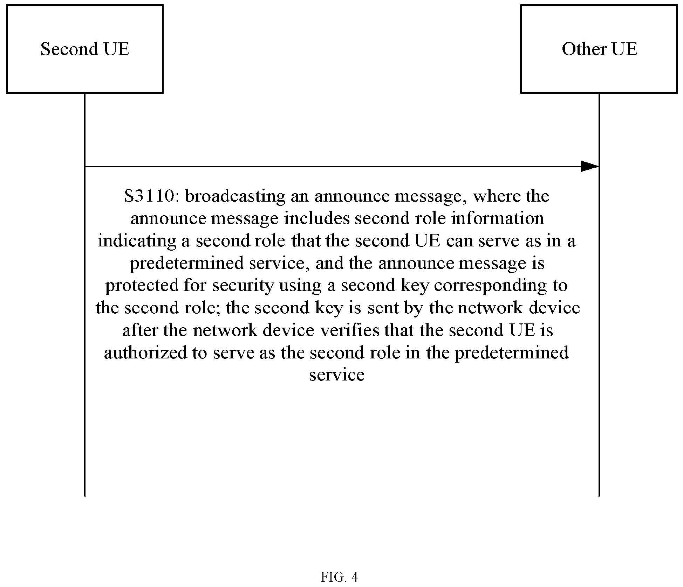

As shown in FIG. 4, an embodiment of the present disclosure provides an information processing method performed by a second UE, where the method includes the following steps.

S3110: broadcasting an announcement message, where the announcement message includes second role information indicating a second role that the second UE can serve as in a predetermined service, and the announcement message is protected for security using a second key corresponding to the second role; the second key is sent by the network device after the network device verifies that the second UE is authorized to serve as the second role in the predetermined service.

In this embodiment, the second UE may be any communication device that has obtained the second key corresponding to the served second role from the network device. For example, the second UE may be one of the aforementioned first UEs.

In this embodiment, the second UE sends the announcement message on a sidelink (SL) broadcast channel. The announcement message includes the second role information indicating the role that the second UE is willing, expecting, or able to serve as.

The announcement message is protected for security using the second key generated based on the second role information.

In this embodiment, the security protection includes but is not limited to integrity protection.

For example, the second key is used to perform integrity protection on the entire announcement message.

After other UEs within the second UE period monitors the announcement message, the second role information will be carried in plaintext in the announcement message, the key for verifying the integrity of the announcement message is determined, and the integrity of the announcement message is verified. If the integrity verification is passed, it can be considered that the second UE participating in the predetermined service has been discovered, and the role that the second UE can serve as is known.

The second key may be generated by the network device based on the second role information. Alternatively, the second key may be defined in protocols or pre-configured in valid UEs and generated based on the second role information.

In this embodiment, the second UE uses Model A to achieve a mutual discovery with other UEs.

In some embodiments, the predetermined service is a ranging/SL positioning service, and the announcement message further includes a ranging/SL positioning service code (RSC).

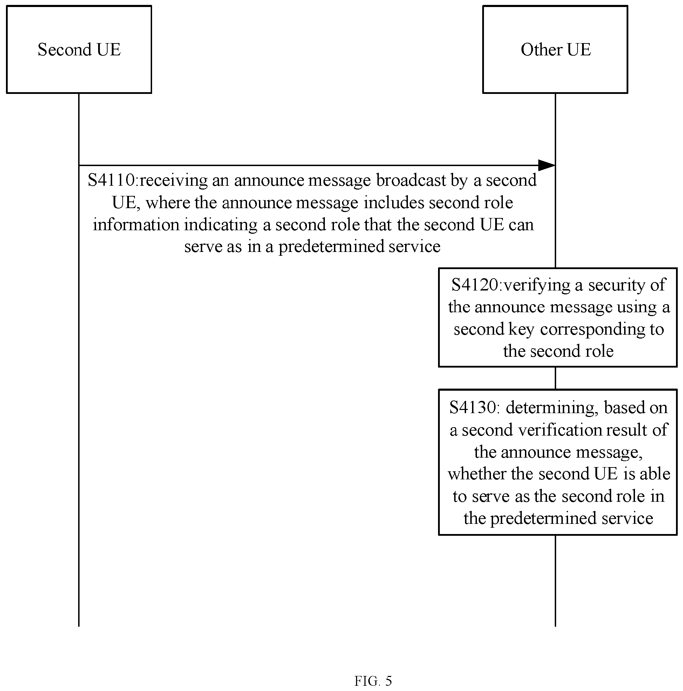

As shown in FIG. 5, an embodiment of the present disclosure provides an information processing method performed by a third UE, where the method includes the following steps.
S4110: receiving an announcement message broadcast by a second UE, where the announcement message includes second role information indicating a second role that the second UE can serve as in a predetermined service;
S4120: verifying a security of the announcement message using a second key corresponding to the second role; and
S4130: determining, based on a second verification result of the announcement message, whether the second UE is able to serve as the second role in the predetermined service.

In this embodiment, the third UE may be the aforementioned first UE. In this embodiment, Model A is used to achieve a mutual discovery between UEs. Thus, the third UE can monitor the announcement message on the broadcast channel.

The announcement message carries the second role information in plaintext. The second role information may at least include a role code.

Since the announcement message carries the second role information in plaintext, the third UE can use the second key which is obtained from the network device, pre-configured, or defined in protocols and generated based on the second role information to verify the security of the announcement message.

In some embodiments, S4120 may include:
verifying the integrity of the announcement message using the second key.

The second verification result includes verification success and/or verification failure. For example, if the integrity verification of the announcement message using the second key indicates that the announcement message is intact, the verification is considered to be passed (or successful); otherwise, the verification fails.

For example, step S4130 may include:
if the second verification result indicates that the announcement message passes the verification, determining that the second UE can serve as the second role in the predetermined service; and/or
if the second verification result indicates that the announcement message fails the verification, determining that the second UE cannot serve as the second role in the predetermined service.

In some embodiments, the method further includes:
if it is determined that the second UE can serve as the second role in the predetermined service, storing the identification information of the second UE and the second role information for subsequent participation in the predetermined service with the second UE.

The identification information of the second UE may include but is not limited to Layer 2 and/or Layer 3 identifiers or any other information that can uniquely identify the UE.

In some embodiments, the method further includes:
if it is determined that the second UE cannot serve as the second role in the predetermined service, discarding the announcement message, i.e., ignoring the announcement message sent by the second UE.

In some embodiments, the predetermined service is a ranging/SL positioning service, and the announcement message further includes a ranging/SL positioning service code (RSC).

In some embodiments, the predetermined service is not limited to the ranging/SL positioning service.

In some embodiments, determining whether the second UE can serve as the second role in the predetermined service based on the second verification result of the announcement message includes:
in response to the second verification result indicating that the announcement message fails the security verification, determining that the second UE cannot serve as the second role in the predetermined service; or
in response to the second verification result indicating that the announcement message passes the security verification, determining that the second UE can serve as the second role in the predetermined service.

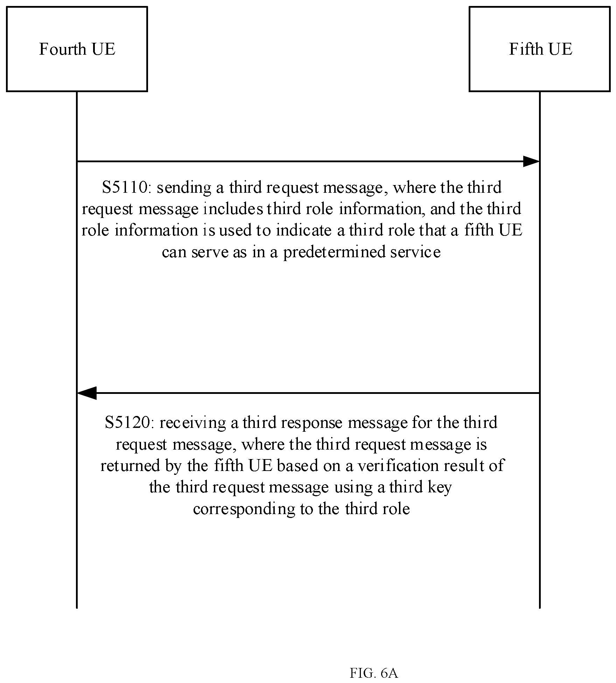

As shown in FIG. 6A, an embodiment of the present disclosure provides an information processing method performed by a fourth UE, where the method includes the following steps.

S5110: sending a third request message, where the third request message includes third role information, and the third role information is used to indicate a third role that a fifth UE can serve as in a predetermined service.

S5120: receiving a third response message for the third request message, where the third request message is returned by the fifth UE based on a verification result of the third request message using a third key corresponding to the third role.

In some embodiments, the fourth UE uses Model B to achieve mutual discovery with other devices.

In some embodiments, the fourth UE may carry the role information (third role information) of the role it wants to discover.

For example, the fourth UE itself can perform the predetermined service, but can only serve as some roles at a time and requires assistance from UEs serving as other roles. The third role information may be carried in plaintext in the third request message. Then, other UEs receiving the third request message can verify the third request message successfully only if they obtain the third key generated based on the third role information.

If the fourth UE receives the third response message returned by the fifth UE, it can be considered that the fifth UE has been discovered and determined that the fifth UE have the authority to serve as the third role.

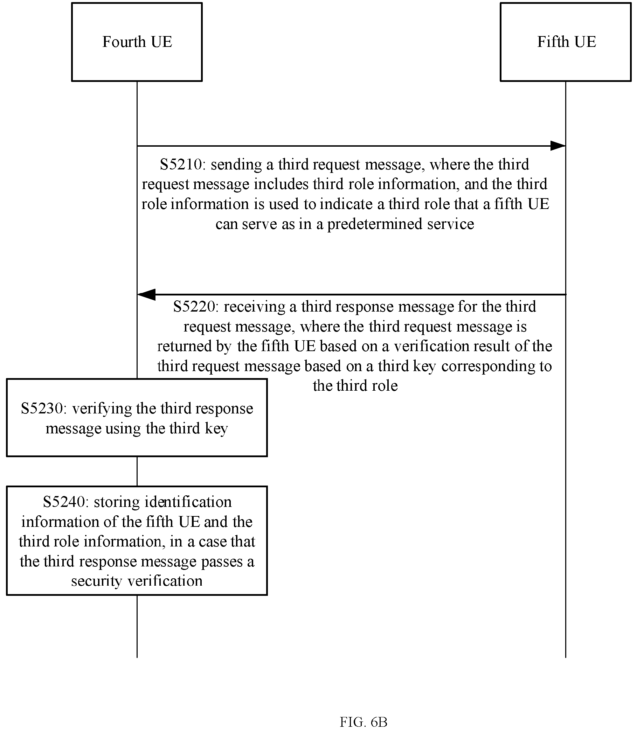

As shown in FIG. 6B, an embodiment of the present disclosure provides an information processing method performed by a fourth UE, where the method includes the following steps.

S5210: sending a third request message, where the third request message includes third role information, and the third role information is used to indicate a third role that a fifth UE can serve as in a predetermined service.

S5220: receiving a third response message for the third request message, where the third request message is returned by the fifth UE based on a verification result of the third request message based on a third key corresponding to the third role.

S5230: verifying the third response message using the third key.

S5240: storing identification information of the fifth UE and the third role information, in a case that the third response message passes a security verification.

In the embodiment of the present disclosure, the third response message may carry role information (e.g., fourth role information) provided by the fifth UE and indicating a role that the fifth UE can serve as in the predetermined service.

In one embodiment, since the fifth UE returns the third response message based on the third request message, the fifth UE returns the third response message only if the fifth UE can serve as the third role. Therefore, the fourth role information must include the third role information.

Further, the third response message may be sent on a broadcast channel such as an SL channel. Thus, the fourth UE may monitor multiple third response messages. Since the third role information is carried in plaintext in the third response message, the fourth UE can determine, based on the plaintext role information, whether the currently received response message is the one it wants to receive.

The fourth UE uses the third key to verify the third response message. If the third response message passes the verification, for example, if the integrity verification of the third response message using the third key is successful, it indicates that the fifth UE is indeed the UE the fourth UE wants to discover and can serve as the third role.

In some embodiments, if the third request message fails the security verification performed by the fifth UE using the third key, the third response message is a rejection message.

If the third response message is a rejection message, it indicates that the fourth UE may not have discovered a UE that can serve as the third role.

In another embodiment, the method further includes:
if no third response message is received within a preset duration after sending the third request message, considering that the fourth UE has failed to discover a UE that can serve as the third role.

In one embodiment, the predetermined service is a ranging/SL positioning service, and the third request message includes a ranging/SL positioning service code (RSC).

In one embodiment, the third request message includes fourth role information indicating a role that the fourth UE can serve as in the predetermined service.

If the third request message further includes the role information (e.g., fourth role information) indicating a role that the fourth UE can serve as, the fifth UE considers that it has discovered the fourth UE which can serve as the fourth role, after the third request message passes the security verification.

In this embodiment, the security verification includes at least integrity verification.

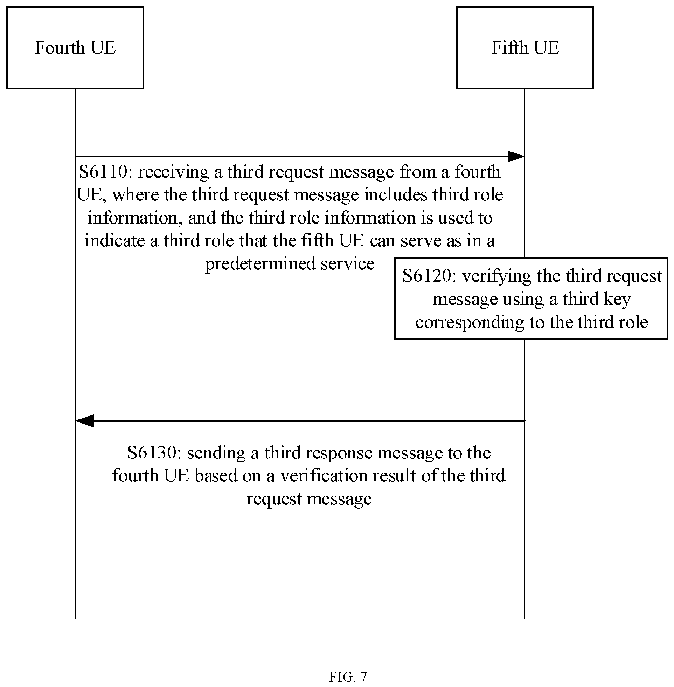

As shown in FIG. 7, an embodiment of the present disclosure provides an information processing method performed by a fifth UE, where the method includes the following steps.

S6110: receiving a third request message from a fourth UE, where the third request message includes third role information, and the third role information is used to indicate a third role that the fifth UE can serve as in a predetermined service.

S6120: verifying the third request message using a third key corresponding to the third role.

S6130: sending a third response message to the fourth UE based on a verification result of the third request message.

The fifth UE monitors the third request message on a broadcast channel. The third request message carries the third role information in plaintext. Thus, the fifth UE uses the third key generated based on the third role information to verify the security of the third request message, for example, at least verifying the integrity of the third request message, and then returns the third response message to the fourth UE based on the verification result.

For example, sending the third response message to the fourth UE based on the verification result of the third request message includes:
in response to the third request message passing the security verification, sending an acceptance message to the fourth UE, where the acceptance message includes the third role information and the acceptance message is protected for security using the third key.

In one embodiment, sending the third response message to the fourth UE based on the verification result of the third request message includes:
in response to the third request message failing the security verification, sending a rejection message to the fourth UE.

In other embodiments, if the third request message fails the security verification, the fifth UE may not return any message to the fourth UE.

In the embodiments of the present disclosure, the predetermined service may include a ranging/SL positioning service. The third request message may further include a ranging/SL positioning service code (RSC).

The ranging/SL positioning server or UDM authorizes the UE by checking the service agreement or UE subscription. If the UE role is authorized, in addition to the service requested by the UE, the discovery key generation function (e.g., PKMF/DDNMF) generates a discovery key by associating the key with the authorized role of the UE. If the UE role is not authorized, the discovery key generation function (e.g., PKMF/DDNMF) will not generate a discovery key for the UE.

The UE then obtains the discovery key from the network and uses the discovery key associated with the requested service and the authorized role of the UE to protect the broadcast discovery message. When a peer UE receives the discovery message and the role declared in the discovery message is the role the peer UE wants to discover, the peer UE will use the discovery key associated with the declared/authorized role to verify the received discovery message. In this way, a misbehaving UE claiming an unauthorized role (a role different from the authorized role associated with the discovery key) cannot deceive the peer UE, as the peer UE will not be able to verify the discovery message using the discovery key associated with the unauthorized role.

When a remote UE uses Model A to discover roles that other UEs can serve, the process may include the following steps.

Steps 1-6 (Reference announcing UE (A-UE)).
1. a-UE sends a discovery request message containing a ranging relay service code (RSC) and the role it wants to serve in the ranging service (e.g., target UE). Optionally, the discovery request message may also include the role it wants to discover (e.g., reference UE).
2. The 5G DDNMF/PKMF of the A-UE sends an authorization request to the ranging/SL positioning server or the UDM of the A-UE for announcement authorization, including the relay service code (RSC), the role the A-UE (target UE) wants to serve in the ranging service, and the role the A-UE (target UE) wants to discover (e.g., reference UE).
3. The ranging/SL positioning server checks the service agreement, or the UDM of the A-UE checks the subscription of the A-UE to determine whether the A-UE is allowed to serve as the role (of target UE).
4. If the A-UE is allowed to serve the requested role (target UE) in the service, the ranging/SL positioning server or the UDM of the A-UE returns an authorization response to the 5G DDNMF/PKMF, including the authorized role of the A-UE (target UE).
5. When the A-UE is authorized to serve as the requested role (target UE), the 5G DDNMF/PKMF/PCF of the A-UE generates a discovery key by associating the RSC with the authorized role of the A-UE (target UE) and stores the discovery key with the RSC and the authorized role of the A-UE (target UE). If the 5G DDNMF/PKMF/PCF of the A-UE does not authorize the requested role, it will not generate a discovery key and will reject the discovery request of the A-UE.
6. The 5G DDNMF/PKMF/PCF of the A-UE returns the authorized role of the A-UE (target UE) and the discovery key in the discovery response. The A-UE stores the discovery key with the RSC and its authorized role (target UE).
   Steps 7-17 (Monitoring UE (M-UE)).
7. M-UE sends a discovery request message containing the relay service code (RSC), the role that it wants to serve as in the ranging service (e.g., reference UE), and the role it wants to discover (e.g., target UE).
8. The 5G DDNMF/PKMF/PCF of the M-UE sends an authorization request to the ranging/SL positioning server or the UDM of the M-UE, the authorization request includes the relay service code (RSC), the role the M-UE (reference UE) wants to serve as in the ranging service, and the role the M-UE wants to discover (e.g., target UE).
9. The ranging/SL positioning server checks the service agreement, or the UDM of the M-UE checks the subscription of the M-UE to determine whether the M-UE is allowed to serve as the reference UE role.
10. If the M-UE is allowed to serve as the requested role (reference UE) in the service, the ranging/SL positioning server or the UDM of the M-UE returns an authorization response to the 5G DDNMF/PKMF/PCF, the authorization response includes the authorized role of the M-UE (reference UE).
11. If the M-UE is authorized to serve as the requested role (reference UE), the 5G DDNMF/PKMF of the M-UE contacts the 5G DDNMF/PKMF/PCF of the A-UE (the target UE the M-UE wants to discover) by sending a monitor request message.
12. The 5G DDNMF/PKMF/PCF of the A-UE sends an authorization request to the ranging/SL positioning server or the UDM, the authorization request includes the authorized roles of the M-UE and the A-UE.
13. The ranging/SL positioning server or the UDM checks whether the authorized roles of the M-UE and the A-UE match in the requested service (e.g., for a ranging service between two UEs, whether the roles are target UE and reference UE).
14. The ranging/SL positioning server or the UDM returns an authorization response indicating whether the authorization is successful.
15. If the authorization to ranging/SL positioning server or the UDM is successful, the 5G DDNMF/PKMF/PCF of the A-UE retrieves the corresponding discovery key stored with the RSC and the role of the A-UE (target UE).
16. The 5G DDNMF/PKMF/PCF of the a-UE responds to the 5G DDNMF/PKMF/PCF of the M-UE, and sends a monitoring response message including the RSC, the role of the a-UE (target UE), and the corresponding discovery key.
17. The 5G DDNMF/PKMF of the M-UE returns the authorized role of the M-UE (reference UE) and the discovery key in the discovery response. The M-UE stores the discovery key with the RSC and the role it wants to discover (target UE).
   Steps 18-19 on PC5 Communication.
18. The A-UE announces the start. The A-UE forms an announcement message containing the RSC and its declared role (target UE) and protects the message using the discovery key.
19. The M-UE monitors the announcement message and checks the RSC and the claimed role in the announcement message. The M-UE then retrieves the discovery key stored with the RSC and the declared role of the A-UE (target UE). The M-UE uses the retrieved discovery key to verify the announcement message.

It should be noted that a UE-1 (A-UE) authorized as a positioning UE claims to be a target UE in the announcement message, and the message is protected by the discovery key associated with its authorized role (i.e., positioning UE). When a UE-2 (M-UE) serving as a reference UE monitors messages from the target UE, it will receive the message from UE-1 and recognize that UE-1 claims to be in the target UE role. UE-2 will then use the discovery key associated with the role it wants to discover (i.e., target UE) to verify the received message. Since the keys used by UE-1 and UE-2 are different, the verification will fail. In this way, a misbehaving UE cannot deceive the peer UE by claiming an unauthorized role.

When a remote UE uses Model B to discover roles that other UEs can serve as, the process may include Steps 1-17 (Similar to Model A).

Steps 18-20 (PC5 Communication).

18. The discoverer (R-UE) forms a request message containing the RSC, its claimed role (reference UE), and the expected role of the discoverer (target UE). The R-UE then protects the request message using the discovery key associated with the RSC and the expected role (target UE).

The discoveree (E-UE) monitors the request message and checks the RSC, the claimed role (reference UE), and the expected role (target UE) in the message. The E-UE then retrieves the discovery key stored with the RSC and the expected role of the R-UE (target UE). The E-UE uses the retrieved discovery key to verify the request message.

20. If the verification is successful, the E-UE returns a response message to the discoverer, containing the RSC and its authorized role that the R-UE wants to discover. The E-UE then protects the response message using the discovery key stored with the RSC and its authorized role (target UE).

21. The R-UE receives the response message and checks the RSC and the authorized role of the E-UE (target UE) in the message. The R-UE then retrieves the discovery key stored with the RSC and the role of the E-UE (target UE). The R-UE uses the retrieved discovery key to verify the request message.

It should be noted that a UE-1 (R-UE) authorized as a positioning UE claims to be a reference UE and expects to discover a target UE in the request message, which is protected by the discovery key associated with its authorized role (i.e., positioning UE). When a UE-2 (E-UE) serving as a target UE receives the message from UE-1 and recognizes that UE-1 claims to be in the reference UE role and expects to discover a target UE, UE-2 will use the discovery key associated with the expected role (i.e., target UE) to verify the received message. Since the keys used by UE-1 and UE-2 are different, the verification will fail. In this way, a misbehaving UE cannot deceive the peer UE by claiming an unauthorized role.

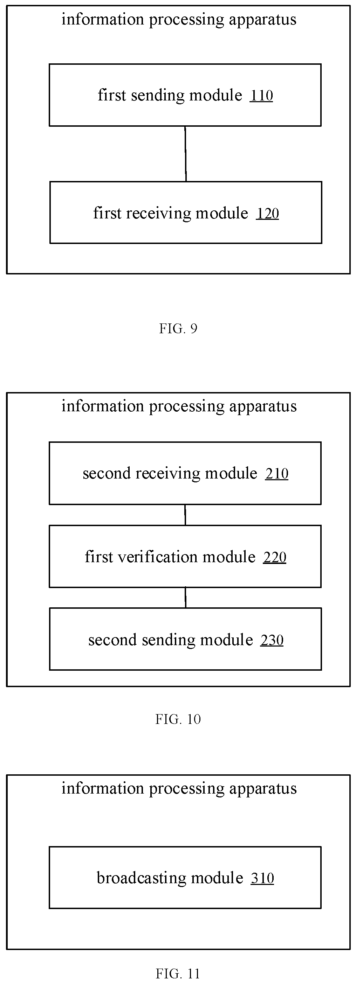

As shown in FIG. 9, an embodiment of the present disclosure provides an information processing apparatus, where the apparatus includes:
a first sending module 110 configured to send a first request message to a network device, where the first request message includes first role information indicating a first role that the first UE serves as in a predetermined service, the first role information is used by the network device to verify whether the first UE is able to serve as the first role in the predetermined service.
a first receiving module 120 configured to receive a first response message returned by the network device based on the first request message, where the first response message is at least used to indicate whether the first UE is authorized to serve as the first role,
where the first UE is authorized to serve as the first role, the first response message is an acceptance message including a first key corresponding to the first role, and the first key is used for a mutual discovery between the first UE and other UEs.

The information processing apparatus may include the first UE.

In some embodiments, the first sending module 110 and the first receiving module 120 may be program modules. When the program is executed by a processor, the above operations can be implemented.

In other embodiments, the first sending module 110 and the first receiving module 120 may be software-hardware combined modules, including but not limited to various programmable arrays such as field-programmable gate arrays and/or complex programmable logic devices.

In further embodiments, the first sending module 110 and the first receiving module 120 may be pure hardware modules, which includes but not limited to application-specific integrated circuits.

In some embodiments, if the first UE is not authorized to serve as the first role, the first response message is a rejection message.

In some embodiments, the predetermined service includes a ranging/SL positioning service, and the first request message further includes a ranging/SL positioning service code (RSC).

The security protection for the discovery process in ranging/SL positioning services will reuse the security mechanisms defined for ProSe/V2X services as much as possible. It is assumed that the roles a UE (e.g., positioning UE, reference UE) is allowed to serve in ranging/SL positioning services can be registered in the UE subscription or specific ranging/SL positioning service agreements. This means that both the UDM and the ranging/SL positioning server can be candidate functions for authorizing UE roles for the requested ranging/SL positioning service.

As shown in FIG. 10, an embodiment of the present disclosure provides an information processing apparatus, where the apparatus includes:
a second receiving module 210 configured to receive a first request message from a first UE, where the first request message includes first role information indicating a first role that the first UE serves as in a predetermined service;
a first verification module 220 configured to verify, based on the first role information, whether the first UE is able to serve as the first role in the predetermined service, to obtain a first verification result; and
a second sending module 230 configured to, in response to the first verification result indicating that the first UE is authorized to serve as the first role, return an acceptance message to the first UE, where the acceptance message includes a first key generated based on the first role information, and the first key is used for mutual discovery between the first UE and other UEs.

The information processing apparatus may include the network device.

In some embodiments, the second receiving module 210, the first verification module 220, and the second sending module 230 may be program modules. When the program is executed by a processor, the above operations can be implemented.

In other embodiments, the second receiving module 210, the first verification module 220, and the second sending module 230 may be software-hardware combined modules, including but not limited to various programmable arrays such as FPGAs and/or CPLDs.

In further embodiments, the second receiving module 210, the first verification module 220, and the second sending module 230 may be pure hardware modules, including but not limited to ASICs.

In some embodiments, the predetermined service includes a ranging/SL positioning service, and the announcement message further includes a ranging/SL positioning service code (RSC).

As shown in FIG. 11, an embodiment of the present disclosure provides an information processing apparatus, where the apparatus includes:
a broadcasting module 310 configured to broadcast an announcement message, where the announcement message includes second role information, the second role information indicates a second role that the second UE is able to serve as in a predetermined service, the announcement message is protected for security using a second key corresponding to the second role and the second key is sent by the network device in a case that the network device verifies that the second UE is authorized to serve as the second role in the predetermined service.

This information processing apparatus may be the second UE.

In some embodiments, the information processing apparatus further includes a storage module, connected to the broadcasting module 310, configured to store the announcement message.

In some embodiments, the broadcasting module 310 may be a program module; when the program is executed by a processor, it can implement the operations described above.

In other embodiments, the broadcasting module 310 may be a combination of hardware and software; the hardware-software combination includes but is not limited to various programmable arrays, such as field-programmable gate arrays and/or complex programmable logic devices.

In yet other embodiments, the broadcasting module 310 may be a pure hardware module; the pure hardware module includes but is not limited to an application-specific integrated circuit.

In some embodiments, the predetermined service includes a ranging/sidelink (SL) positioning service; the announcement message further includes a ranging/SL positioning service code (RSC).

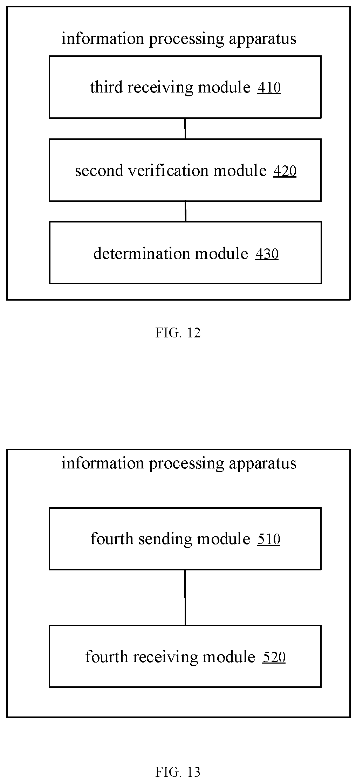

As shown in FIG. 12, an embodiment of the present disclosure provides an information processing apparatus, where the apparatus includes:
a third receiving module 410 configured to receive an announcement message broadcasted by a second UE, where the announcement message includes second role information, and the second role information indicates a second role that the second UE is able to serve as in a predetermined service;
a second verification module 420 configured to use a second key corresponding to the second role to verify the security of the announcement message; and
a determination module 430, configured to determine, based on a second verification result of the announcement message, whether the second UE is able to serve as the second role in the predetermined service.

In some embodiments, this information processing apparatus may be the third UE.

In some embodiments, the third receiving module 410, the second verification module 420, and the determination module 430 may be program modules; when the program is executed by a processor, it can implement the operations described above.

In other embodiments, the third receiving module 410, the second verification module 420, and the determination module 430 may be a combination of hardware and software; the hardware-software combination includes but is not limited to various programmable arrays, such as FPGAs and/or CPLDs.

In yet other embodiments, the third receiving module 410, the second verification module 420, and the determination module 430 may be pure hardware modules; the pure hardware modules include but are not limited to ASICs.

In some embodiments, the predetermined service includes a ranging/SL positioning service; the announcement message further includes a ranging/SL positioning service code (RSC).

In some embodiments, the determination module 430 is configured to:
in response to the second verification result indicating that the announcement message fails the security verification, determine that the second UE is unable to serve as the second role in the predetermined service; or
in response to the second verification result indicating that the announcement message passes the security verification, determine that the second UE is able to serve as the second role in the predetermined service.

As shown in FIG. 13, an embodiment of the present disclosure provides an information processing apparatus, where the apparatus includes:
a fourth sending module 510 configured to send a third request message, where the third request message includes third role information, and the third role information is used to indicate a third role that a fifth UE serves as in a predetermined service;
a fourth receiving module 520 configured to receive a third response message for the third request message, where the third request message is returned by the fifth UE based on a verification result of the third request message based on a third key corresponding to the third role.

This information processing apparatus may be the fourth UE.

In some embodiments, the fourth sending module 510 and the fourth receiving module 520 may be program modules; when the program is executed by a processor, it can implement the operations described above.

In other embodiments, the fourth sending module 510 and the fourth receiving module 520 may be a combination of hardware and software; the hardware-software combination includes but is not limited to various programmable arrays, such as FPGAs and/or CPLDs.

In yet other embodiments, the fourth sending module 510 and the fourth receiving module 520 may be pure hardware modules; the pure hardware modules include but are not limited to ASICs.

In some embodiments, the apparatus further includes:
a third verification module configured to verify the third response message using the third key;
a storage module, configured to store identification information of the fifth UE and the third role information if the third response message passes the security verification.

In some embodiments, if the third request message fails the security verification performed by the fifth UE using the third key, the third response message is a rejection message.

In some embodiments, the predetermined service includes a ranging/SL service; the third request message includes a ranging/SL positioning service code (RSC).

In some embodiments, the third request message further includes fourth role information indicating a role that the fourth UE serves as in the predetermined service.

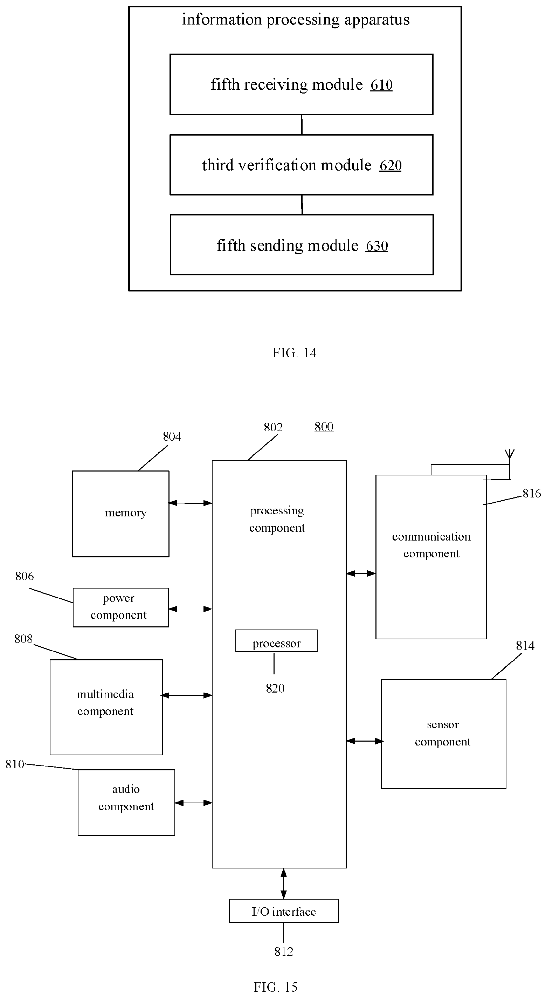

As shown in FIG. 14, an embodiment of the present disclosure provides an information processing apparatus, where the apparatus includes:
a fifth receiving module 610 configured to receive a third request message from a fourth UE, where the third request message includes third role information, and the third role information is used to indicate a third role that the fifth UE serves as in a predetermined service;
a third verification module 620, configured to verify the third request message using a third key corresponding to the third role; and
a fifth sending module 630, configured to send a third response message to the fourth UE based on a verification result of the third request message.

This information processing apparatus may be the fifth UE.

In some embodiments, the fifth receiving module 610, the third verification module 620, and the fifth sending module 630 may be program modules; when the program is executed by a processor, it can implement the operations described above.

In other embodiments, the fifth receiving module 610, the third verification module 620, and the fifth sending module 630 may be a combination of hardware and software; the hardware-software combination includes but is not limited to various programmable arrays, such as FPGAs and/or CPLDs.

In yet other embodiments, the fifth receiving module 610, the third verification module 620, and the fifth sending module 630 may be pure hardware modules; the pure hardware modules include but are not limited to ASICs.

In some embodiments, sending the third response message to the fourth UE based on the verification result of the third request message includes:
in response to the third request message passing the security verification, sending an acceptance message to the fourth UE, where the acceptance message includes the third role information and is protected for security using the third key.

In some embodiments, the fifth sending module 630 is further configured to:
in response to the third request message failing the security verification, send a rejection message to the fourth UE.

Embodiments of the present disclosure further provide a communication device, including:
a memory for storing processor-executable instructions;
a processor connected to the memory,
where the processor is configured to execute the information processing method according to any of the technical solutions described above.

The processor may include various types of storage media, which are non-transitory computer storage media capable of retaining stored information after the communication device is powered off.

Here, the communication device includes a UE or a network device. The UE may be any one of the first to fifth UEs described above.

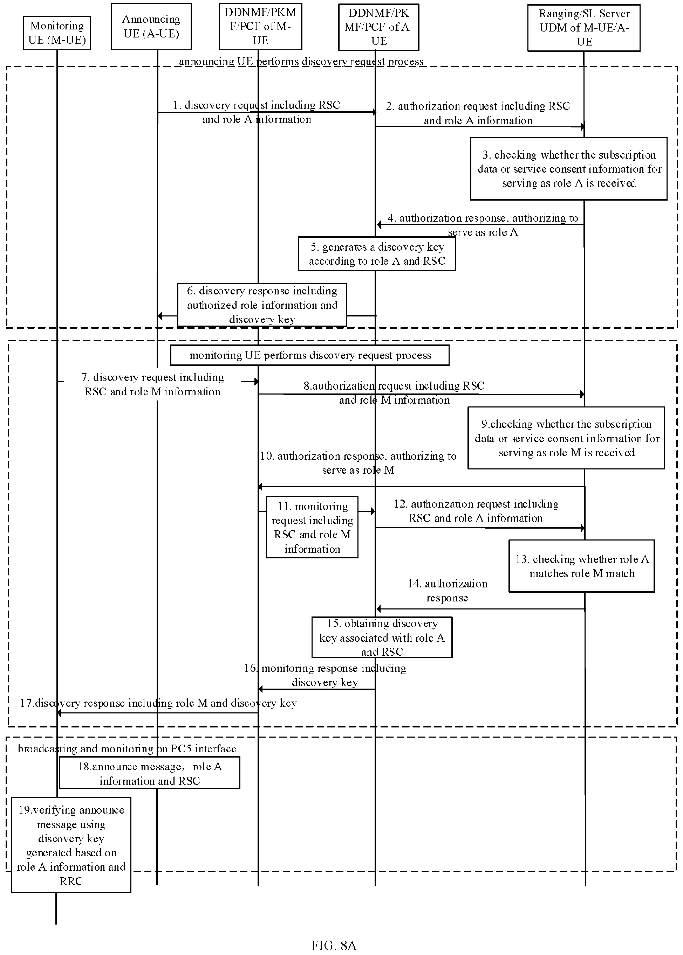

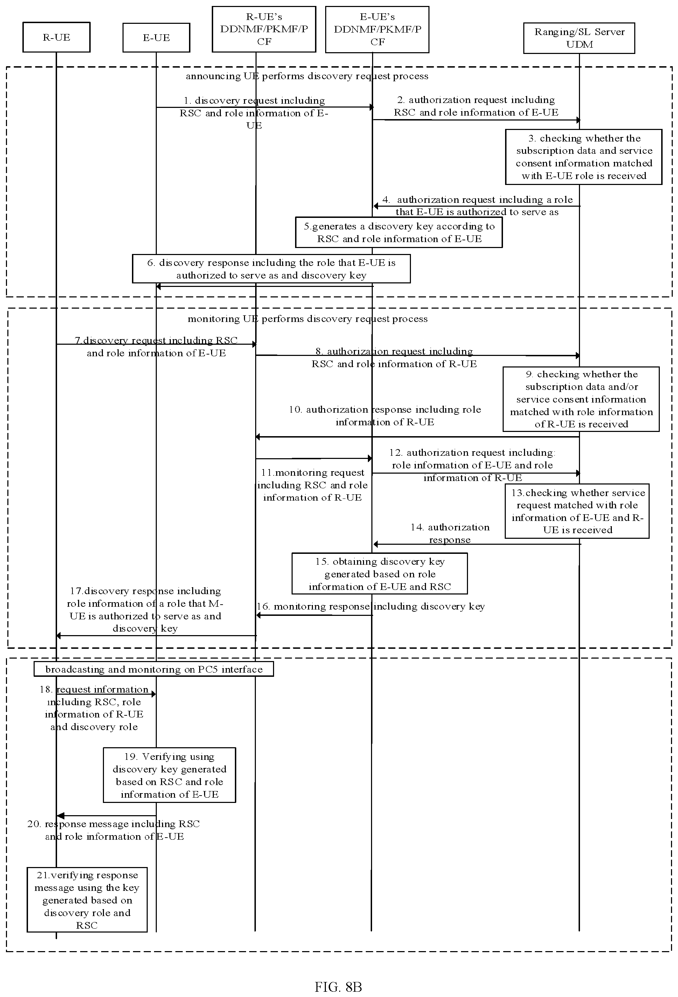

The processor may be connected to the memory via a bus or other means to read executable programs stored in the memory, such as the methods illustrated in FIGS. 2A, 2B, 3A, 3B, 4, 5, 6A, 6B, 7, 8A, and 8B, or at least one of them.

FIG. 15 is a block diagram of a UE 800 according to an exemplary embodiment. For example, the UE 800 may be a mobile phone, computer, digital broadcast terminal, messaging device, gaming console, tablet, medical device, fitness device, personal digital assistant, or the like.

Referring to FIG. 15, the UE 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the UE 800, such as operations associated with display, telephone calls, data communication, camera operations, and recording operations. The processing component 802 may include one or more processors 820 to execute instructions to perform all or part of the steps of the methods described above. Moreover, the processing component 802 may include one or more modules to facilitate interaction between the processing component 802 and other components. For example, the processing component 802 may include a multimedia module to facilitate interaction between the multimedia component 808 and the processing component 802.

The memory 804 is configured to store various types of data to support operations of the UE 800. Examples of such data include instructions for any application or method operating on the UE 800, contact data, phonebook data, messages, pictures, videos, etc. The memory 804 may be implemented using any type of volatile or non-volatile memory devices or a combination thereof, such as static random-access memory (SRAM), electrically erasable programmable read-only memory (EEPROM), erasable programmable read-only memory (EPROM), programmable read-only memory (PROM), read-only memory (ROM), magnetic memory, flash memory, magnetic or optical disks.

The power component 806 provides power to various components of the UE 800. The power component 806 may include a power management system, one or more power sources, and other components associated with generating, managing, and distributing power for the UE 800.

The multimedia component 808 includes a screen that provides an output interface between the UE 800 and the user. In some embodiments, the screen may include a liquid crystal display (LCD) and a touch panel (TP). If the screen includes a touch panel, the screen may be implemented as a touchscreen to receive input signals from the user. The touch panel includes one or more touch sensors to sense touches, swipes, and gestures on the touch panel. The touch sensors may not only sense the boundaries touch or swipe action but also detect the duration and pressure associated with the touch or swipe operation. In some embodiments, the multimedia component 808 includes a front-facing camera and/or a rear-facing camera. When the UE 800 is in an operation mode, such as a shooting mode or a video mode, the front-facing camera and/or the rear-facing camera may receive external multimedia data. Each front-facing camera and rear-facing camera may be a fixed optical lens system or have focal length and optical zoom capabilities.

The audio component 810 is configured to output and/or input audio signals. For example, the audio component 810 includes a microphone (MIC). When the UE 800 is in an operation mode, such as a call mode, a recording mode, or a voice recognition mode, the MIC is configured to receive external audio signals. The received audio signals may be further stored in the memory 804 or transmitted via the communication component 816. In some embodiments, the audio component 810 further includes a speaker for outputting audio signals.

The I/O interface 812 provides an interface between the processing component 802 and peripheral interface modules, such as a keyboard, click wheel, buttons, etc. The buttons may include, but are not limited to, a home button, a volume button, a start button, and a lock button.

The sensor component 814 includes one or more sensors for providing status assessments of various aspects of the UE 800. For example, the sensor component 814 may detect the open/closed status of the device 800, the relative positioning of components (e.g., the display and keypad of the UE 800), a change in position of the UE 800 or a component of the UE 800, the presence or absence of user contact with the UE 800, the orientation or acceleration/deceleration of the UE 800, and temperature variations of the UE 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may further include an accelerometer sensor, a gyroscope sensor, a magnetic sensor, a pressure sensor, or a temperature sensor.

The communication component 816 is configured to facilitate wired or wireless communication between the UE 800 and other devices. The UE 800 may access a wireless network based on communication standards, such as WiFi, 2G, or 3G, or a combination thereof. In an exemplary embodiment, the communication component 816 receives broadcast signals or broadcast-related information from an external broadcast management system via a broadcast channel. In an exemplary embodiment, the communication component 816 further includes a near-field communication (NFC) module to facilitate short-range communication. For example, the NFC module may be implemented based on radio-frequency identification (RFID) technology, infrared data association (IrDA) technology, ultra-wideband (UWB) technology, Bluetooth (BT) technology, and other technologies.

In exemplary embodiments, the UE 800 may be implemented by one or more application-specific integrated circuits (ASICs), digital signal processors (DSPs), digital signal processing devices (DSPDs), programmable logic devices (PLDs), field-programmable gate arrays (FPGAs), controllers, microcontrollers, microprocessors, or other electronic components for performing the methods described above.

In exemplary embodiments, a non-transitory computer-readable storage medium storing instructions is provided, such as the memory 804 storing instructions, the instructions may be executable by the processor 820 of the UE 800 to perform the methods described above. For example, the non-transitory computer-readable storage medium may be a ROM, random-access memory (RAM), CD-ROM, magnetic tape, floppy disk, optical data storage device, or the like.

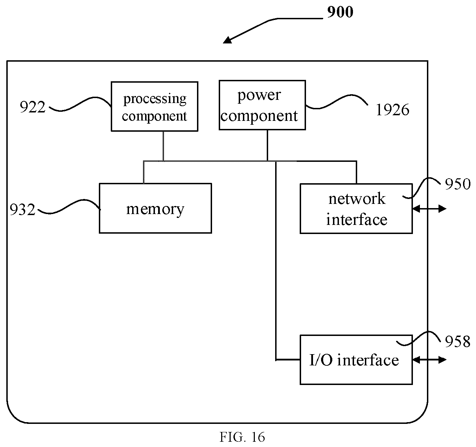

As shown in FIG. 16, an embodiment of the present disclosure illustrates a structure of an access device. For example, the communication device 900 may be provided as a network-side device. The communication device may be any of the access network elements and/or network functions described above.

Referring to FIG. 16, the communication device 900 includes a processing component 922, which further includes one or more processors, and memory resources represented by a memory 932 for storing instructions executable by the processing component 922, such as applications. The applications stored in the memory 932 may include one or more modules, each corresponding to a set of instructions. Moreover, the processing component 922 is configured to execute the instructions to perform the methods described above, such as the methods illustrated in FIGS. 2A, 2B, 3A, 3B, 4, 5, 6A, 6B, 7, 8A, and 8B.

The communication device 900 may further include a power component 926 configured to perform power management for the communication device 900, a wired or wireless network interface 950 configured to connect the communication device 900 to a net6work, and an input/output (I/O) interface 958. The communication device 900 may operate based on an operating system stored in the memory 932, such as Windows Server^{™}, Mac OS X^{™}, Unix^{™}, Linux^{™}, FreeBSD^{™} or the like.

Those skilled in the art, after considering the specification and practicing the invention disclosed herein, will readily conceive of other implementations of the embodiments of the present disclosure. The present disclosure is intended to cover any variations, uses, or adaptive changes of the embodiments of the present disclosure, which follow the general principles of the embodiments of the present disclosure and include common general knowledge or conventional technical means in the art not disclosed in the embodiments of the present disclosure. The specification and embodiments are to be regarded as exemplary only, with the true scope and spirit of the embodiments of the present disclosure indicated by the following claims.

It should be understood that the embodiments of the present disclosure are not limited to the precise structures described above and illustrated in the drawings, and that various modifications and changes may be made without departing from the scope thereof. The scope of the embodiments of the present disclosure is limited only by the appended claims.

## Claims

1. An information processing method, performed by a first user equipment (UE), comprising:
sending a first request message to a network device, wherein the first request message comprises first role information, the first role information indicates a first role that the first UE serves as in a predetermined service, and the first role information is used by the network device to verify whether the first UE is able to serve as the first role in the predetermined service; and
receiving a first response message returned by the network device based on the first request message, wherein the first response message at least indicates whether the first UE is authorized to serve as the first role,
wherein in response to the first UE being authorized to serve as the first role, the first response message is determined to be an acceptance message comprising a first key corresponding to the first role, wherein the first key is configured for a mutual discovery between the first UE and other UEs.

2. The method according to claim 1, wherein
in response to the first UE not being authorized to serve as the first role, the first response message is a rejection message.

3. The method according to claim 1 or 2, wherein
the predetermined service comprises a ranging or sidelink (SL) positioning service;
the first request message further comprises a ranging or SL positioning service code (RSC).

4. An information processing method, performed by a network device, comprising:
receiving a first request message from a first UE, wherein the first request message comprises first role information, and the first role information indicates a first role that the first UE serves as in a predetermined service;
verifying, based on the first role information, whether the first UE is able to serve as the first role in the predetermined service, to obtain a first verification result; and
in response to the first verification result indicating that the first UE is authorized to serve as the first role, returning an acceptance message to the first UE, wherein the acceptance message comprises a first key generated based on the first role information, and the first key is used for a mutual discovery between the first UE and other UEs.

5. An information processing method, performed by a second UE, comprising:
broadcasting an announcement message, wherein the announcement message comprises second role information, the second role information indicates a second role that the second UE is able to serve as in a predetermined service, the announcement message is protected for security using a second key corresponding to the second role and the second key is sent by the network device in a case that the network device verifies that the second UE is authorized to serve as the second role in the predetermined service.

6. The method according to claim 5, wherein
the predetermined service comprises a ranging or sidelink (SL) positioning service; and
the announcement message further comprises a ranging or SL positioning service code (RSC).

7. An information processing method, performed by a third UE, comprising:
receiving an announce message broadcasted by a second UE, the announce message comprising second role information, wherein the second role information indicates a second role that the second UE is able to serve as in a predetermined service;
verifying a security of the announce message using a second key corresponding to the second role; and
determining, based on a second verification result of the announce message, whether the second UE is able to serve as the second role in the predetermined service.

8. The method according to claim 7, wherein
the predetermined service is a ranging or sidelink (SL) positioning service; and
the announce message further comprises a ranging or SL positioning service code (RSC).

9. The method according to claim 7 or 8, wherein determining whether the second UE is able to serve as the second role based on the second verification result of the announce message comprises:
in response to the second verification result indicating that the announce message fails a security verification, determining that the second UE is not able to serve as the second role in the predetermined service; or
in response to the verification result indicating that the announce message passes the security verification, determining that the second UE is able to serve as the second role in the predetermined service.

10. An information processing method, performed by a fourth UE, comprising:
sending a third request message, wherein the third request message comprises third role information, and the third role information indicates a third role that a fifth UE serves as in a predetermined service; and
receiving a third response message for the third request message, wherein the third request message is returned by the fifth UE based on a verification result of the third request message based on a third key corresponding to the third role.

11. The method according to claim 10, further comprising:
verifying the third response message using the third key;
storing identification information of the fifth UE and the third role information, in a case that the third response message passes a security verification.

12. The method according to claim 10 or 11, wherein
in a case that the third request message fails the security verification performed by the fifth UE using the third key, the third response message is a rejection message.

13. The method according to any one of claims 10 to 12, wherein
the predetermined service is a ranging or sidelink (SL) positioning service; and
the third request message comprises a ranging or SL positioning service code (RSC).

14. The method according to claim 10, wherein
the third request message further comprises fourth role information indicating a role that the fourth UE serves as in the predetermined service.

15. An information processing method, performed by a fifth UE, comprising:
receiving a third request message from a fourth UE, wherein the third request message comprises third role information, and the third role information indicates a third role that the fifth UE serves as in a predetermined service;
verifying the third request message using a third key corresponding to the third role; and
sending a third response message to the fourth UE based on a verification result of the third request message.

16. The method according to claim 15, wherein sending the third response message to the fourth UE based on the verification result of the third request message comprises:
in response to the third request message passing a security verification, sending an acceptance message to the fourth UE, wherein the acceptance message comprises the third role information and the acceptance message is protected for security using the third key.

17. The method according to claim 15 or 16, wherein sending the third response message to the fourth UE based on the verification result of the third request message comprises:
in response to the third request message failing a security verification, sending a rejection message to the fourth UE.

18. An information processing apparatus, comprising:
a first sending module configured to send a first request message to a network device, wherein the first request message comprises first role information, the first role information indicates a first role that the first UE serves as in a predetermined service, and the first role information is used by the network device to verify whether the first UE is able to serve as the first role in the predetermined service;
a first receiving module configured to receive a first response message returned by the network device based on the first request message, wherein the first response message at least indicates whether the first UE is authorized to serve as the first role,
wherein in response to the first UE being authorized to serve as the first role, the first response message is determined to be an acceptance message comprising a first key corresponding to the first role, wherein the first key is configured for a mutual discovery between the first UE and other UEs.

19. An information processing apparatus, comprising:
a second receiving module configured to receive a first request message from a first UE, wherein the first request message comprises first role information, and the first role information indicates a first role that the first UE serves as in a predetermined service;
a first verification module configured to verify, based on the first role information, whether the first UE is able to serve as the first role in the predetermined service, to obtain a first verification result; and
a second sending module configured to, in response to the first verification result indicating that the first UE is authorized to serve as the first role, return an acceptance message to the first UE, wherein the acceptance message comprises a first key generated based on the first role information, and the first key is configured for a mutual discovery between the first UE and other UEs.

20. An information processing apparatus, comprising:
a broadcasting module configured to broadcast an announce message, wherein the announce message comprises second role information, the second role information indicates a second role that the second UE is able to serve as in a predetermined service, the announce message is protected for security using a second key corresponding to the second role and the second key is sent by the network device in a case that the network device verifies that the second UE is authorized to serve as the second role in the predetermined service.

21. An information processing apparatus, comprising:
a third receiving module configured to receive an announce message broadcasted by a second UE, the announce message comprising second role information, wherein the second role information indicates a second role that the second UE is able to serve as in a predetermined service;
a second verification module configured to verify a security of the announce message using a second key corresponding to the second role; and
a determination module configured to determine, based on a second verification result of the announce message, whether the second UE is able to serve as the second role in the predetermined service.

22. An information processing apparatus, comprising:
a fourth sending module configured to send a third request message, wherein the third request message comprises third role information, and the third role information indicates a third role that a fifth UE serves as in a predetermined service;
a fourth receiving module configured to receive a third response message for the third request message, wherein the third request message is returned by the fifth UE based on a verification result of the third request message based on a third key corresponding to the third role.

23. An information processing apparatus, comprising:
a fifth receiving module configured to receive a third request message from a fourth UE, wherein the third request message comprises third role information, and the third role information indicates a third role that the fifth UE serves as in a predetermined service;
a third verification module configured to verify the third request message using a third key corresponding to the third role; and
a fifth sending module configured to send a third response message to the fourth UE based on a verification result of the third request message.

24. A communication device, comprising a processor, a transceiver, a memory and an executable program stored in the memory and executable by the processor, wherein the processor runs the executable program to perform the method according to any one of claims 1 to 3, 4, 5 to 6, 7 to 9, 10 to 14, or 15 to 17.

25. A computer-readable storage medium having stored therein an executable program that, when executed by a processor, causes the method according to any one of claims 1 to 3, 4, 5 to 6, 7 to 9, 10 to 14, or 15 to 17 to be implemented.
